# EUROPEAN PATENT APPLICATION

(11) **EP 4 183 851 A1**
(43) Date of publication of application: **24.05.2023**
(21) Application number: 21841738.4
(22) Date of filing: 16.07.2021
(51) Int. Cl.: C09K 3/10, H01G 11/80, H01G 11/84, F16J 15/10, H01M 50/105, H01M 50/121, H01M 50/126, H01M 50/178, H01M 50/184, H01M 50/55, H01M 50/562

(54) **ADHESIVE FILM FOR METAL TERMINALS, METAL TERMINAL WITH ADHESIVE FILM FOR METAL TERMINALS, POWER STORAGE DEVICE USING SAID ADHESIVE FILM FOR METAL TERMINALS, AND METHOD FOR MANUFACTURING POWER STORAGE DEVICE**

(30) Priority: 16.07.2020 JP 2020122460; 12.05.2021 JP 2021081326
(71) Applicant: DAI NIPPON PRINTING CO., LTD., Tokyo 162-8001 (JP)
(72) Inventor: MOCHIZUKI, Youichi, Tokyo 162-8001 (JP); KAGATA, Tsubasa, Tokyo 162-8001 (JP); TANAKA, Jun, Tokyo 162-8001 (JP)
(74) Representative: Müller-Boré & Partner Patentanwälte PartG mbB
(86) International application number: PCT/JP2021/026821
(87) International publication number: WO 2022/014706

(57) **Abstract**

Provided is an adhesive film for metal terminals which has excellent heat resistance and sealing performance. An adhesive film for metal terminals which is intended to be interposed between a metal terminal that is electrically connected to an electrode for a power storage device element and a power storage device outer covering material that seals the power storage device element, in which at least one resin layer is contained in the adhesive film for metal terminals, the resin layer has a melting point of 150°C to 270°C, inclusive, and the resin layer comprises an elastomer.

## Description

### TECHNICAL FIELD

The present disclosure relates to an adhesive film for metal terminals, a metal terminal with adhesive film for metal terminals, an electrical storage device using an adhesive film for metal terminals, and a method for manufacturing an electrical storage device.

### BACKGROUND ART

Various types of electrical storage devices have been developed heretofore, and in every electrical storage device, an exterior material for electrical storage devices is an essential member for sealing electrical storage device elements such as an electrode and an electrolyte. Metallic exterior materials for electrical storage devices have been often used heretofore as exterior materials for electrical storage devices, and in recent years, electrical storage devices have been required to be diversified in shape, and desired to be thinner and lighter as performance of, for example, electric cars, hybrid electric cars, personal computers, cameras and mobile phones has been enhanced. However, metallic exterior materials for electrical storage devices that have often been heretofore used have the disadvantage that it is difficult to keep up with diversification in shape, and there is a limit on weight reduction.

Thus, in recent years, a laminated sheet with a base material layer, an adhesive layer, a barrier layer and a heat-sealable resin layer laminated in the stated order has been proposed as an exterior material for electrical storage devices which is easily processed into diversified shapes and is capable of achieving thickness reduction and weight reduction. When such a film-shaped exterior material for electrical storage devices is used, an electrical storage device element is sealed with the exterior material for electrical storage devices by heat-welding the peripheral edge portion of the exterior material for electrical storage devices while the heat-sealable resin layers located at the innermost layer of the exterior material for electrical storage devices are opposed to each other.

A metal terminal protrudes from the heat-sealed portion of the exterior material for electrical storage devices, and the electrical storage device element sealed by the exterior material for electrical storage devices is electrically connected to the outside by a metal terminal electrically connected to an electrode of the electrical storage device element. That is, of the portion where the exterior material for electrical storage devices is heat-sealed, a portion where the metal terminal is present is heat-sealed to the metal terminal is sandwiched between heat-sealable resin layers. Since the metal terminal and the heat-sealable resin layer are composed of different materials, adhesion is likely to decrease at an interface between the metal terminal and the heat-sealable resin layer.

Thus, an adhesive film may be disposed between the metal terminal and the heat-sealable resin layer for the purpose of, for example, improving adhesion between the metal terminal and the heat-sealable resin layer. Examples of the adhesive film include those described in Patent Document 1.

### PRIOR ART DOCUMENT

### PATENT DOCUMENT

Patent Document 1: Japanese Patent Laid-open Publication No. 2015-79638

### SUMMARY OF THE INVENTION

### PROBLEMS TO BE SOLVED BY THE INVENTION

An adhesive film disposed between a metal terminal and a heat-sealable resin layer is heat-sealed between the exterior material for electrical storage devices and the metal terminal at a high temperature and a high pressure, and therefore is required to have excellent heat resistance and sealability.

As electrical storage devices in which an adhesive film is used, those containing an electrolytic solution, such as lithium ion batteries, are common, and all-solid-state batteries in which a solid electrolyte is used as an electrolyte are also known. Since an all-solid-state battery has a solid electrolyte, the all-solid-state battery can be charged at a higher speed at a high temperature as compared to an electrical storage device using an electrolytic solution, and is assumed to be used in an environment at a higher temperature as compared with a lithium ion battery or the like.

In addition, an all-solid-state battery may be pressed at a high temperature and a high pressure (e.g. at a temperature of about 120°C to 150°C and a pressure of about 100 MPa) with a metal terminal attached to a cell in a manufacturing process thereof for the purpose of, for example, increasing the ionic conductivity of a solid electrolyte, and therefore the metal terminal portion may reach a high temperature. During rapid charge-discharge, the temperature of the metal terminal may reach about 150°C due to resistance heat generation. Therefore, when the above-described adhesive film is applied to an all-solid-state battery, particularly excellent heat resistance and high sealability are required.

Under these circumstances, a main object of the present disclosure is to provide an adhesive film for metal terminal which has excellent heat resistance and sealability. Further, an object of the present disclosure is to provide a metal terminal with an adhesive film for metal terminal using the adhesive film for metal terminal, an electrical storage device using the adhesive film for metal terminal, and a method for manufacturing the electrical storage device.

### MEANS FOR SOLVING THE PROBLEM

The inventors of the present disclosure have extensively conducted studies for solving the above-described problems. As a result, the present inventors have found that an adhesive film for metal terminal exhibits excellent heat resistance and sealability when including at least one resin layer having a melting point of 150°C or higher and 270°C or lower, with the resin layer containing an elastomer. The present disclosure is an invention that has been completed by further conducting studies based on the above-mentioned findings.

That is, the present disclosure provides an invention of an aspect as described below.

An adhesive film for metal terminal which is interposed between a metal terminal electrically connected to an electrode of an electrical storage device element and an exterior material for electrical storage devices which seals the electrical storage device element, the adhesive film for metal terminal including at least one resin layer, in which the resin layer has a melting point of 150°C or higher and 270°C or lower, and the resin layer contains an elastomer.

### ADVANTAGES OF THE INVENTION

According to the present disclosure, it is possible to provide an adhesive film for metal terminal which has excellent heat resistance and sealability to a metal terminal. Further, an object of the present disclosure is to provide a metal terminal with an adhesive film for metal terminal using the adhesive film for metal terminal, an electrical storage device using the adhesive film for metal terminal, and a method for manufacturing the electrical storage device.

### BRIEF DESCRIPTION OF THE DRAWINGS

Fig. 1 is a schematic plan view of an electrical storage device of the present disclosure.
Fig. 2 is a schematic sectional view taken along line A-A' in Fig. 1.
Fig. 3 is a schematic sectional view taken along line B-B' in Fig. 1.
Fig. 4 is a schematic sectional view of an adhesive film for metal terminal according to the present disclosure.
Fig. 5 is a schematic sectional view of an adhesive film for metal terminal according to the present disclosure.
Fig. 6 is a schematic sectional view of an adhesive film for metal terminal according to the present disclosure.
Fig. 7 is a schematic sectional view of an adhesive film for metal terminal according to the present disclosure.
Fig. 8 is a schematic sectional view of an exterior material for electrical storage devices according to the present disclosure.

### EMBODIMENTS OF THE INVENTION

The adhesive film for metal terminal according to the present disclosure is an adhesive film for metal terminal which is interposed between a metal terminal electrically connected to an electrode of an electrical storage device element and an exterior material for electrical storage devices which seals the electrical storage device element, the adhesive film for metal terminal including at least one resin layer, in which the resin layer has a melting point of 150°C or higher and 270°C or lower, and the resin layer contains an elastomer. The adhesive film for metal terminal according to the present disclosure has the above-mentioned configuration, and exhibits excellent heat resistance and sealability.

The electrical storage device of the present disclosure is an electrical storage device including: an electrical storage device element including at least a positive electrode, a negative electrode and an electrolyte; an exterior material for electrical storage devices that seals the electrical storage device element; and a metal terminal electrically connected to each of the positive electrode and the negative electrode and protruding to the outside of the exterior material for electrical storage devices, in which the adhesive film for metal terminal according to the present disclosure is interposed between the metal terminal and the exterior material for electrical storage devices. Hereinafter, the adhesive film for metal terminal, the metal terminal with an adhesive film for metal terminal, the electrical storage device using the adhesive film for metal terminal, and a method for manufacturing an electrical storage device in the present disclosure will be described in detail.

For the numerical range in this specification, a numerical range indicated by the term "to" means "or more" and "or less". For example, the expression of "2 to 15 mm" means 2 mm or more and 15 mm or less.

In addition, examples of the method for identifying MD of the adhesive film for metal terminal include a method in which a cross-section of the adhesive film for metal terminal (e.g. a cross-section of a first resin layer, an intermediate layer of a second resin layer) is observed with an electron microscope to identify a sea-island structure. In the method, the direction parallel to a cross-section in which the average of the diameters of the island shapes in a direction perpendicular to the thickness direction of the adhesive film for metal terminal is maximum can be determined as MD. Specifically, a length-direction cross-section of the adhesive film for metal terminal and cross-sections (a total of 10 cross-sections) at angular intervals of 10 degrees from a direction parallel to the length-direction cross-section to a direction perpendicular to the length-direction cross-section are observed with an electron microscope photograph to examine sea-island structures. Next, in each cross-section, the shape of each island is observed. For the shape of each island, the linear distance between the leftmost end in a direction perpendicular to the thickness direction of the adhesive film for metal terminal and the rightmost end in the perpendicular direction is defined as a diameter y. In each cross-section, the average of the top 20 diameters y in descending order of the diameter y of the island shape is calculated. The direction parallel to a cross-section having the largest average of the diameters y of the island shapes is determined as MD. For example, the heat shrinkage ratio after the adhesive film for metal terminal is left standing in an environment at 150°C for 2 minutes is measured, and a direction in which a larger shrinkage ratio is obtained is determined as MD.

### 1. Adhesive film for metal terminal

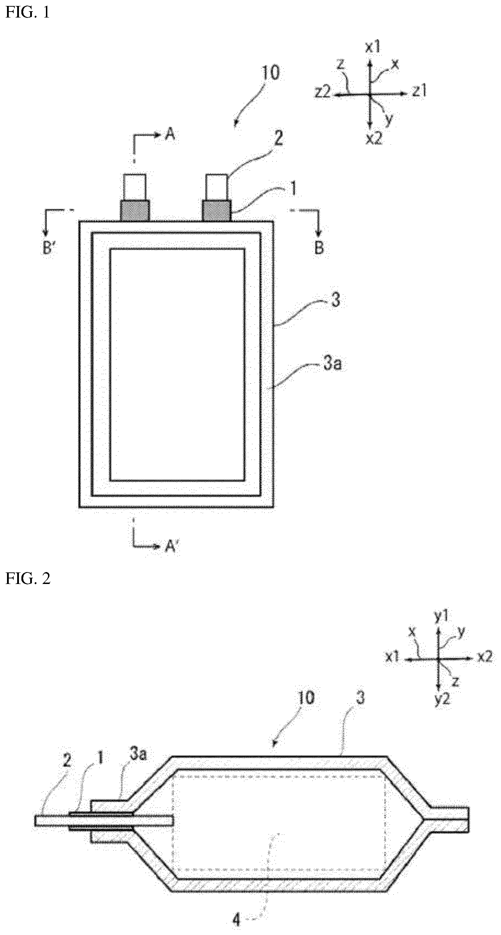

The adhesive film for metal terminal according to the present disclosure is interposed between a metal terminal electrically connected to an electrode of an electrical storage device element and an exterior material for electrical storage devices for sealing the electrical storage device element. Specifically, as shown in, for example, Figs. 1 to 3, an adhesive film 1 for metal terminal according to the present disclosure is interposed between a metal terminal 2 electrically connected to an electrode of an electrical storage device element 4 and an exterior material 3 for electrical storage devices for sealing the electrical storage device element 4. The metal terminal 2 protrudes to the outside of the exterior material 3 for electrical storage devices, and is sandwiched between the exterior materials 3 for electrical storage devices with the adhesive film 1 for metal terminal interposed between the metal terminal 2 and the exterior material 3 for electrical storage devices at a peripheral edge portion 3a of the heat-sealed exterior material 3 for electrical storage devices.

As described above, for example, it is assumed that the temperature becomes as high as about 150°C during a hot-pressing step in a manufacturing process of an all-solid-state battery, rapid charging, or the like, and it is required to have tolerance to a temperature of about 150°C. For this reason, it is necessary to use a heat-sealable resin layer having a melting point of 150°C or higher for an exterior material 3 for electrical storage devices, and when sides of the exterior materials for electrical storage devices are heat-sealed, the heating temperature is typically in the range of about 160 to 250°C, the pressure is typically in the range of about 0.5 to 2.0 MPa, and a flat plate-shaped metallic seal bar is used. Similarly, when sides of the metal terminal and the exterior material for electrical storage devices are heat-sealed with the adhesive film for metal terminal interposed therebetween, the temperature is typically in the range of about 160 to 250°C, the pressure is typically in the range of about 0.5 to 2.0 MPa, and if necessary, a metallic seal head with a level difference is used in which a level difference for adjusting a difference associated with the thickness of the metal terminal or the adhesive film for metal terminal is provided in a relevant portion of the seal head. It is desirable that the adhesive film be bonded at a predetermined position on the metal terminal in advance, and for example, when the bonding is performed by heat-weld, heating and pressurization are performed multiple times, for example, the steps of temporary bonding and main bonding to the metal terminal are carried out. The temporary bonding step is a step of temporarily fixing the adhesive film for metal terminal to the metal terminal and removing air bubbles, and the main bonding step is a step of bonding the adhesive film for metal terminal to the metal terminal by performing heating and pressurizing one or more times under the condition of a higher temperature over the temporary bonding step. The step of temporarily bonding the adhesive film for metal terminal to the metal terminal is performed one or two times, for example, at a temperature of about 160 to 230°C and a pressure of about 0.1 to 0.5 MPa for a time of about 10 to 20 seconds using a metallic seal head covered with heat-resistant rubber having a hardness of about 20 to 50 and a thickness of about 2 to 5 mm, and the main bonding step is performed about one or two times, for example, at a temperature of about 180 to 250°C and a pressure of about 0.2 to 1.0 MPa for a time of about 10 to 20 seconds using a metallic seal head covered with heat-resistant rubber having a hardness of about 20 to 50 and a thickness of about 2 to 5 mm for the purpose of heat-welding between the adhesive film for metal terminal and the metal terminal. If necessary, by providing a relevant portion of the seal head with a level difference for adjusting a difference associated with the thickness of the metal terminal or the adhesive film for metal terminal, the welding can be efficiently performed. By providing an adhesive layer on a surface of the adhesive film for metal terminal on the metal terminal side, the metal terminal can be bonded to the adhesive film for metal terminal at a relatively low temperature. For example, by laminating a metal-bondable heat-curable resin as an adhesive layer when the resin is not completely cured, then heat-sealing the metal terminal to the adhesive film for metal terminal, and then curing the resin through aging, heat resistance can be imparted. In this case, the metal terminal and the adhesive film for metal terminal are sealed under condition of, for example, about 100°C to 200°C and a pressure of about 0.2 to 3.0 MPa, and the aging is performed under conditions of 40 to 150°C and about several minutes to 5 days. When the electrical storage device to which the adhesive film for metal terminal according to the present disclosure is applied is an all-solid-state battery, particularly high temperature and high pressure are applied to the adhesive film for metal terminal. The exemplified method for attaching the adhesive film for metal terminal is illustrative, and being limited to a specific method is not intended. For example, the pressurization time or the like is appropriately adjusted by, for example, the thickness of the adhesive film for metal terminal.

The adhesive film 1 for metal terminal according to the present disclosure is provided for enhancing adhesion between the metal terminal 2 and the exterior material 3 for electrical storage devices. Enhancement of adhesion between the metal terminal 2 and exterior material 3 for electrical storage devices improves the sealing property of the electrical storage device element 4. As described above, the electrical storage device element is sealed such that the metal terminal 2 electrically connected to the electrode of the electrical storage device element 4 protrudes to the outside of the exterior material 3 for electrical storage devices when the electrical storage device element 4 is heat-sealed. Here, the adhesive film 1 for metal terminal and a heat-sealable resin layer 35 located at the innermost layer of the exterior material 3 for electrical storage devices are both required to have tolerance to about 150°C, and when these layers are formed of different materials, the sealing property of the electrical storage device element is likely be low at an interface with the heat-sealable resin layer 35.

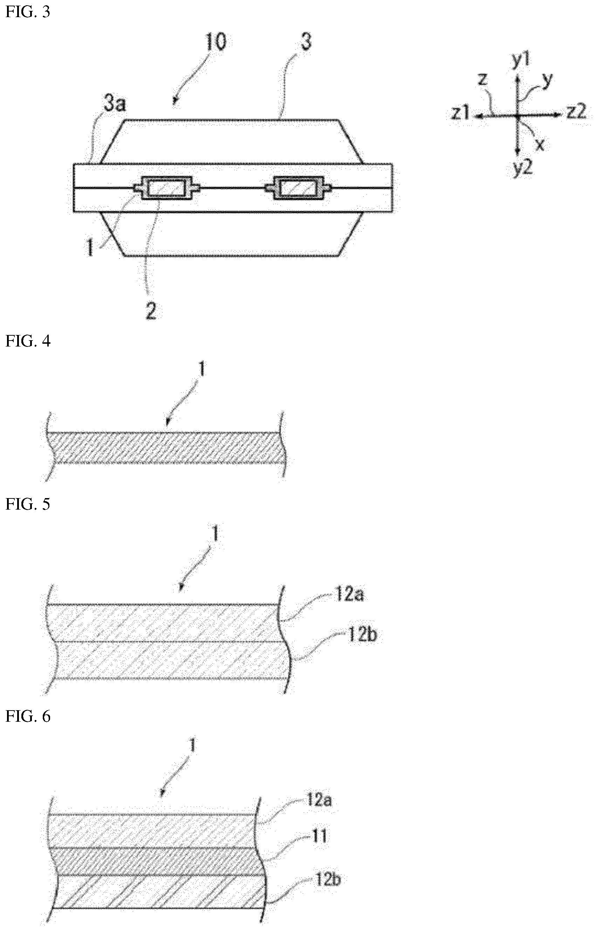

The adhesive film 1 for metal terminal according to the present disclosure has a melting point of 150°C or higher and 270°C or lower, and includes at least one resin layer containing an elastomer (hereinafter, sometimes referred to as a "resin layer A"). As shown in Fig. 4, the adhesive film 1 for metal terminal according to the present disclosure may have a single layer, or multiple layers as shown in Fig. 5 to 7.

When the adhesive film 1 for metal terminal according to the present disclosure has a single layer, the adhesive film 1 for metal terminal is formed of the resin layer A having a melting point of 150°C or higher and 270°C or lower and containing an elastomer, and a surface on the metal terminal side and a surface of the exterior material for electrical storage devices are formed of the resin layer A.

When the adhesive film 1 for metal terminal according to the present disclosure has multiple layers, at least one layer may be formed of the resin layer A having a melting point of 150°C or higher and 270°C or lower and containing an elastomer. For example, when the adhesive film 1 for metal terminal according to the present disclosure has a two-layer structure as shown in Fig. 5, the adhesive film 1 for metal terminal is a laminate of a first resin layer 12a and a second resin layer 12b, and at least one of these layers is formed of the resin layer A. In the adhesive film 1 for metal terminal according to the present disclosure, it is preferable that the resin forming a surface on the side of the exterior material for electrical storage devices and the resin forming a surface on the metal terminal side are the same resin.

For example, when the adhesive film 1 for metal terminal according to the present disclosure has a three-layer structure as shown in Fig. 6, the adhesive film 1 for metal terminal is a laminate in which the first resin layer 12a, an intermediate layer 11 and the second resin layer 12b are laminated in this order, and at least one of these layers is formed of the resin layer A. The intermediate layer 11 is preferably excellent in heat resistance, and when a higher priority is placed on insulation quality, the melting point of the intermediate layer 11 is preferably 250°C or higher, and more preferably 250 to 300°C. When a higher priority is placed on heat-resistant sealing strength, it is preferable that the intermediate layer 11 is formed of a resin having high adhesion to both the first resin layer 12a and the second resin layer 12b. The melting point of a resin having high adhesion as mentioned above is preferably at least 130°C or higher. The melting point of the intermediate layer 11 is an endothermic peak measured with a differential scanning calorimeter (DSC).

Examples of the resin having high adhesion to both the first resin layer 12a and the second resin layer 12b include imine-modified polyolefin-based resins. The imine-modified polyolefin-based resin is a resin obtained by imine-modifying a polyolefin-based resin. Examples of the polyolefin-based resin that is imine-modified include polyethylene and polypropylene. It is preferable that the imine modification is obtained by subjecting a polyimine compound having a plurality of imino groups in a polyolefin to graft treatment in the presence of a radical generator. The imine-modified polyolefin is preferably imine-modified polypropylene obtained by graft-treating polypropyleneimine.

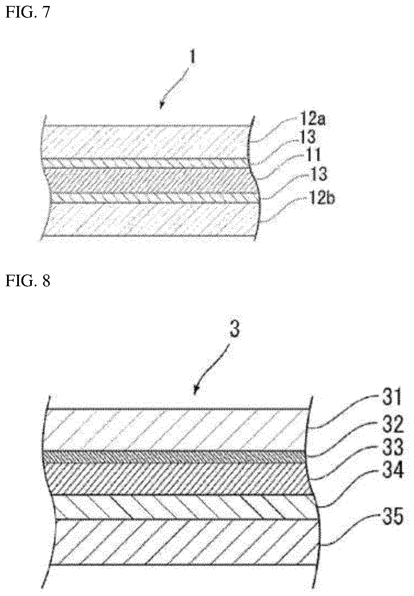

The adhesive film 1 for metal terminal according to the present disclosure may include four or more layers. For example, as shown in Fig. 7, an adhesion promoter layer 13 may be laminated between the first resin layer 12a and the intermediate layer 11 and between the second resin layer 12b and the intermediate layer 11.

In the present disclosure, the first resin layer 12a is disposed on the metal terminal side, and the second resin layer 12b is disposed on the side of the exterior material 3 for electrical storage devices. The metal terminal-side surface of the adhesive film 1 for metal terminal according to the present disclosure has heat sealability to a metal (metal forming a metal terminal), and the surface on the side of the exterior material for electrical storage devices has heat sealability to a heat-sealable resin layer described later. It is preferable that the surface on the side of the exterior material for electrical storage devices is formed of the resin layer A. It is also preferable that the surface on the metal terminal side is formed of the resin layer A.

The at least one resin layer A contained in the adhesive film 1 for metal terminal according to the present disclosure has a melting point of 150 to 270°C. From the viewpoint of more suitably exhibiting the effect of the present disclosure, the melting point of the resin layer A is preferably 180 to 270°C, more preferably 200 to 270°C, still more preferably 200 to 250°C. The melting point of the resin layer A is an endothermic peak measured with a differential scanning calorimeter (DSC).

Examples of the preferred resin contained in the resin layer A include, but are not particularly limited to, polyethylene terephthalate, polybutylene terephthalate, polyacetal, acrylic resins, homo- or block-type polypropylene, cyclic polyolefins, polymethylpentene and copolymers thereof with α-olefin, nylon 6, nylon 66, polyvinylidene chloride, polyphenylene sulfide, acetyl cellulose, fluorine-based resins such as ETFE, PCTFE, PFA and FEP, resins obtained by modifying any of these resins with maleic anhydride or acrylic acid. Among these, resins obtained by modifying block-type polypropylene with maleic anhydride, resins obtained by modifying polymethylpentene or a copolymer thereof with an α-olefin with maleic anhydride, resins obtained by modifying a cyclic polyolefin with maleic anhydride, polyethylene terephthalate and polybutylene terephthalate are preferable, and polybutylene terephthalate is particularly preferable. The resin layer A may contain one type or two or more types of resins. It is preferable that the resin layer A is formed of a polybutylene terephthalate film containing an elastomer.

The elastomer contained in the resin layer A may be one that serves to enhance the flexibility of the resin layer A while securing excellent heat resistance and sealability thereof. The elastomer is preferably at least one thermoplastic elastomer selected from polyester-based elastomers, polyamide-based elastomers, polyurethane-based elastomers, polyolefin-based elastomers, polystyrene-based elastomers, polyether-based elastomers, and acryl-based elastomers, or a thermoplastic elastomer which is a copolymer of any of the foregoing elastomers. The elastomer is more preferably a thermoplastic elastomer including a block copolymer of polybutylene terephthalate and polyether, and a thermoplastic elastomer including an α-olefin copolymer of polymethylpentene. In the resin layer A, the content of the elastomer is not particularly limited as long as the flexibility of the resin layer A can be enhanced while excellent heat resistance and sealability thereof are secured, and the content of the elastomer is, for example, about 0.1 mass% or more, preferably about 0.5 mass% or more, more preferably about 1.0 mass% or more, still more preferably about 3.0 mass% or more. The content is, for example, about 10.0 mass% or less, about 8.0 mass% or less, or about 5.0 mass% or less. The content is preferably in the range of about 0.1 to 10.0 mass%, about 0.1 to 8.0 mass%, about 0.1 to 5.0 mass%, about 0.5 to 10.0 mass%, about 0.5 to 8.0 mass%, about 0.5 to 5.0 mass%, about 1.0 to 10.0 mass%, about 1.0 to 8.0 mass%, about 1.0 to 5.0 mass%, about 3.0 to 10.0 mass%, about 3.0 to 8.0 mass%, or about 3.0 to 5.0 mass%. The resin contained in the resin layer A may be only an elastomer (i.e. the content of the elastomer in the resin layer A may be 100 mass%). For example, when the elastomer is a copolymerized polybutylene terephthalate containing a resin X that can be copolymerized with polybutylene terephthalate and can form a soft segment, the elastomer alone can be used by adjusting the type and the copolymerization ratio of the resin X. Two or more resins X may be combined to obtain a copolymer including a ternary or higher-order system.

From the viewpoint of suitably exhibiting the effect of the present disclosure, the thickness of the resin layer A is preferably about 20 µm or more, more preferably about 30 µm or more, still more preferably about 50 µm or more. From the same view point, the thickness is preferably about 300 µm or less, more preferably about 200 µm or less, and preferably about 100 µm or less. The thickness is preferably in the range of about 20 to 300 µm, about 20 to 200 µm, about 20 to 100 µm, about 30 to 300 µm, about 30 to 200 µm, about 30 to 100 µm, about 50 to 300 µm, about 50 to 200 µm, or about 50 to 100 µm.

The adhesive film 1 for metal terminal according to the present disclosure can include at least one other resin layer different from the resin layer A. However, from the viewpoint of securing excellent heat resistance of the adhesive film 1 for metal terminal according to the present disclosure, it is preferable that the other resin layer has a melting point of 150°C or higher. The melting point of the other resin layer is preferably about 150 to 300°C, more preferably about 180 to 280°C. The melting point of the other resin layer is an endothermic peak measured with a differential scanning calorimeter (DSC).

When the film includes two or more other resin layers, the compositions of the other resin layers may be the same or different. When the film includes two or more other resin layers A, the compositions of the resin layers A may be the same or different.

From the viewpoint of suitably exhibiting the effect of the present disclosure, the thickness of the other resin layer is preferably about 20 µm or more, more preferably about 50 µm or more, still more preferably about 80 µm or more. From the same view point, the thickness is preferably about 500 µm or less, more preferably about 200 µm or less, and preferably about 150 µm or less. The thickness is preferably in the range of about 20 to 300 µm, about 20 to 200 µm, about 20 to 100 µm, about 30 to 300 µm, about 30 to 200 µm, about 30 to 100 µm, about 50 to 300 µm, about 50 to 200 µm, or about 50 to 100 µm.

When the adhesive film 1 for metal terminal according to the present disclosure includes another resin layer, examples of the laminated configuration of the adhesive film 1 for metal terminal include laminates in which the first resin layer 12a in Fig. 5 is the resin layer A and the second resin layer 12b is the other resin layer; laminates in which the second resin layer 12b in Fig. 5 is the resin layer A and the first resin layer 12a is the other resin layer; laminates in which the first resin layer 12a in Fig 6 or 7 is the resin layer A and the intermediate layer 11 and the second resin layer 12b are other resin layers; laminates in which the second resin layer 12b in Fig. 6 or 7 is the resin layer A and the intermediate layer 11 and the first resin layer 12a are other resin layers; laminates in which the intermediate layer 11 in Fig. 6 or 7 is the resin layer A and the first resin layer 12a and the second resin layer 12b are other resin layers; laminates in which the first resin layer 12a and the second resin layer 12b in Fig. 6 or 7 are the resin layer A and the intermediate layer 11 is the other resin layer; laminates in which the first resin layer 12a and the intermediate layer 11 in Fig. 6 or 7 are the resin layer A and the second resin layer 12b is the other resin layer; and laminates in which the second resin layer 12b and the intermediate layer 11 in Fig. 6 or 7 are the resin layer A and the first resin layer 12a is the other resin layer.

The resin forming the other resin layer is not particularly limited, and examples thereof include polyolefin-based resins, polyamide-based resins, polyester-based resins, epoxy resins, acrylic resins, fluororesins, silicone resins, phenol resins, polyetherimide, polyimide, polycarbonate, and mixtures and copolymers thereof, and polyethylene terephthalate, polyethylene naphthalate, polyphenylene sulfide, polyetheretherketone, polyimide and the like are particularly preferable because they are excellent in heat resistance.

Each of the resin layer A and the other resin layer may further contain additives such as a filler if necessary. When a filler is contained, a short circuit between the metal terminal 2 and a barrier layer 33 of the exterior material 3 for electrical storage devices can be effectively suppressed because the filler functions as a spacer. The particle size of the filler is in the range of about 0.1 to 35 µm, preferably about 5.0 to 30 µm, more preferably about 10 to 25 µm. The content of the filler based on 100 parts by mass of resin components forming the resin layer A and the other resin layer is about 5 to 30 parts by mass, more preferably about 10 to 20 parts by mass.

As the filler, either an inorganic filler or an organic filler can be used. Examples of the inorganic filler include carbon (carbon, graphite), silica, aluminum oxide, barium titanate, iron oxide, silicon carbide, zirconium oxide, zirconium silicate, magnesium oxide, titanium oxide, calcium aluminate, calcium hydroxide, aluminum hydroxide, magnesium hydroxide and calcium carbonate. In addition, examples of the organic filler include fluororesins, phenol resins, urea resins, epoxy resins, acrylic resins, benzoguanamine-formaldehyde condensates, melamine-formaldehyde condensates, crosslinked products of polymethyl methacrylate, and crosslinked products of polyethylene. From the viewpoint of shape stability, rigidity and content resistance, aluminum oxide, silica, fluororesins, acrylic resins and benzoguanamine-formaldehyde condensates are preferable, and among them, spherical aluminum oxide and silica are more preferable. As a method for mixing the filler with resin components that form the resin layer A and the other resin layer, a method in which a masterbatch formed by melting and blending the resin components and the filler with a Banbury mixer or the like is adjusted to a predetermined mixing ratio, a method in which the filler is directly mixed with the resin components, or the like can be adopted.

Each of the resin layer A and the other resin layer may further contain a pigment if necessary. As the pigment, various inorganic pigments can be used. As a specific example of the pigment, carbon (carbon, graphite) exemplified as the filler can be preferably exemplified. Carbon (carbon, graphite) is a material generally used inside an electrical storage device, and there is no possibility of being dissolved in an electrolytic solution. In addition, the carbon has a high coloring effect, allows a sufficient coloring effect to be obtained with an addition amount small enough not to hinder bondability, is not melted by heat, and is capable of increasing the apparent melt viscosity of the resin added. Further, it is possible to impart an excellent sealing property between the exterior material for electrical storage devices and the metal terminal by preventing a pressed portion from being thinned during thermal bonding (heat-sealing).

When a pigment is added to the resin layer A and the other resin layer, the amount of the pigment added is, for example, about 0.05 to 0.3 parts by mass, preferably about 0.1 to 0.2 parts by mass based on 100 parts by mass of resin components forming the resin layer A and the other resin layer when, for example, carbon black having a particle size of about 0.03 µm is used. By adding a pigment to the resin layer A or the other resin layer, the presence or absence of the adhesive film 1 for metal terminal can be detected with a sensor, or visual observation.

The adhesion promoter layer 13 is a layer provided if necessary for the purpose of firmly bonding the intermediate layer 11 to the first resin layer 12a, and the intermediate layer 11 to the second resin layer 12b (see Fig. 7). The adhesion promoter layer 13 may be provided between the intermediate layer 11 and the first resin layer 12a and/or between the intermediate layer 11 and the second resin layer 12b.

The adhesion promoter layer 13 can be formed using a known adhesion promoter such as an isocyanate-based adhesion promoter, a polyethyleneimine-based adhesion promoter, a polyester-based adhesion promoter, a polyurethane-based adhesion promoter or a polybutadiene-based adhesion promoter. From the viewpoint of obtaining high adhesion strength, it is preferable that the adhesion promoter layer is formed of an isocyanate-based adhesion promoter, among the above-mentioned adhesion promoters. As the isocyanate-based adhesion promoter, one composed of an isocyanate component selected from a triisocyanate monomer and polymeric MDI is excellent in lamination strength and undergoes little decrease in lamination strength at a high temperature. In particular, it is particularly preferable to form the adhesion promoter layer from an adhesion promoter composed of triphenylmethane-4,4',4''-triisocyanate which is a triisocyanate monomer or polymethylene polyphenyl polyisocyanate which is polymeric MDI (NCO content: about 30% and viscosity: 200 to 700 mPa ·s). In addition, it is also preferable to form the adhesion promoter layer from tris(p-isocyanatephenyl)thiophosphate which is a triisocyanate monomer, or a two-liquid curable adhesion promoter contain a polyethyleneimine-based resin as a main component and polycarbodiimide as a crosslinking agent.

The adhesion promoter layer 13 can be formed by performing coating by a known coating method such as a bar coating method, a roll coating method or a gravure coating method, and drying. The coating amount of the adhesion promoter is about 20 to 100 mg/m², preferably about 40 to 60 mg/m² in the case of an adhesion promoter composed of triisocyanate, about 40 to 150 mg/m², preferably about 60 to 100 mg/m² in the case of an adhesion promoter composed of polymeric MDI, and about 5 to 50 mg/m², preferably about 10 to 30 mg/m² in the case of a two-liquid curable adhesion promoter containing polyethyleneimine as a main component and polycarbodiimide as a crosslinking agent. The triisocyanate monomer is a monomer having three isocyanate groups per molecule, and the polymeric MDI is a mixture of MDI and a MDI oligomer obtained by polymerizing MDI, and is represented by the following formula.

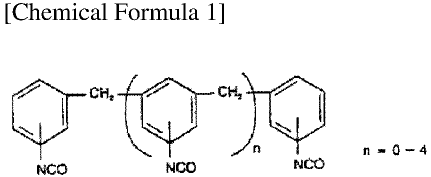

From the viewpoint of suitably exhibiting the effect of the present disclosure, the total thickness of the adhesive film 1 for metal terminal according to the present disclosure is preferably about 50 µm or more, more preferably about 80 µm or more, still more preferably about 100 µm or more. From the same view point, the thickness is preferably about 500 µm or less, more preferably about 300 µm or less, and preferably about 200 µm or less. The thickness is preferably in the range of about 50 to 500 µm, about 50 to 300 µm, about 50 to 200 µm, about 80 to 500 µm, about 80 to 300 µm, about 80 to 200 µm, about 100 to 500 µm, about 100 to 300 µm, or about 100 to 200 µm.

The adhesive film 1 for metal terminal according to the present disclosure can be formed into a film shape by a known method such as an extrusion lamination method, a T-die method, an inflation method, or a thermal lamination method using a resin for forming the resin layer A. In the case of forming a multiple layer, the layers may be laminated by a co-extrusion-type extruder. When the intermediate layer 11, the first resin layer 12a and the second resin layer 12b are laminated with the adhesion promoter layer 13 interposed therebetween, for example, an adhesion promoter that forms the adhesion promoter layer 13 may be applied on the intermediate layer 11 and dried by the above-described method, followed by lamination of each of the first resin layer 12a and the second resin layer 12b on the adhesion promoter layer 13.

The method for interposing the adhesive film 1 for metal terminal between the metal terminal 2 and the exterior material 3 for electrical storage devices is not particularly limited, and for example, as shown in Figs. 1 to 3, the adhesive film 1 for metal terminal may be disposed on the metal terminal 2 at a portion where the metal terminal 2 is sandwiched between the exterior materials 3 for electrical storage devices. In addition, the adhesive film 1 for metal terminal may be disposed on both sides of the metal terminal 2 so as to cross the two metal terminals 2 in a portion where the metal terminal 2 is sandwiched between the exterior materials 3 for electrical storage devices.

### [Metal terminal 2]

The adhesive film 1 for metal terminal according to the present disclosure is interposed between the metal terminal 2 and the exterior material 3 for electrical storage devices. The metal terminal 2 (tab) is a conductive member electrically connected to an electrode (positive electrode or negative electrode) of the electrical storage device element 4, and is composed of a metal material. The metal material that forms the metal terminal 2 is not particularly limited, and examples thereof include aluminum, nickel, and copper. For example, the metal terminal 2 connected to a positive electrode of a lithium ion electrical storage device is typically composed of aluminum or the like. In addition, the metal terminal 2 connected to the negative electrode of the lithium ion electrical storage device is typically formed of copper, nickel or the like, and is formed of copper plated with nickel, a clad material of nickel and copper or the like from the viewpoint of low resistance and prevention of surface degradation.

From the viewpoint of enhancing electrolytic solution resistance, it is preferable that the surface of the metal terminal 2 is subjected to chemical conversion treatment. For example, when the metal terminal 2 is formed of aluminum, specific examples of the chemical conversion treatment include a known method in which a corrosion-resistant film of a phosphate, a chromate, a fluoride, a triazinethiol compound, an acrylate or the like. Among the methods in which a corrosion-resistant film is formed, phosphoric acid chromate treatment using a material including three components: a phenol resin, a chromium (III) fluoride compound and phosphoric acid or three components: an acrylic resin, chromium (III) nitrate and phosphoric acid are preferred.

The size of the metal terminal 2 may be appropriately set according to the size of an electrical storage device used. The thickness of the metal terminal 2 is preferably about 50 to 1000 µm, more preferably about 70 to 800 µm. In addition, the length of the metal terminal 2 is preferably about 1 to 200 mm, more preferably about 3 to 150 mm. In addition, the width of the metal terminal 2 is preferably about 1 to 200 mm, more preferably about 3 to 150 mm.

### [Exterior material 3 for electrical storage devices]

Examples of the exterior material 3 for electrical storage devices include materials having a laminated structure including a laminate having at least a base material layer 31, a barrier layer 33, and a heat-sealable resin layer 35 in the stated order. Fig. 8 shows an aspect in which the base material layer 31, an adhesive agent layer 32 provided if necessary, the barrier layer 33, an adhesive layer 34 provided if necessary, and the heat-sealable resin layer 35 are laminated in the stated order as an example of a cross-sectional structure of the exterior material 3 for electrical storage devices. In the exterior material 3 for electrical storage devices, the base material layer 31 is on the outer layer side, and the heat-sealable resin layer 35 is an innermost layer. During construction of an electrical storage device, the heat-sealable resin layers 35 located on the peripheral edge of the electrical storage device element 4 is brought into contact with each other, and heat-welded to seal the electrical storage device element 4, so that the electrical storage device element 4 is sealed. Figs. 1 to 3 show the electrical storage device 10 where the embossed-type exterior material 3 for electrical storage devices, which is molded by embossing molding, is used, but the exterior material 3 for electrical storage devices may be of non-molded pouch type. Examples of the pouch type include three-way seal, four-way seal and pillow type, and any of the types may be used.

The thickness of the laminate forming the exterior material 3 for electrical storage devices is not particularly limited, and the upper limit is preferably about 180 µm or less, about 160 µm or less, about 155 µm or less, about 140 µm or less, about 130 µm or less, or about 120 µm or less from the viewpoint of cost reduction, improvement of the energy density and the like, and the lower limit is preferably about 35 µm or more, about 45 µm or more, about 60 µm or more, or about 80 µm or more from the viewpoint of maintaining the function of the exterior material 3 for electrical storage devices, which is protection of an electrical storage device element 4. For example, the thickness is preferably in the range of about 35 to 180 µm, about 35 to 160 µm, about 35 to 155 µm, about 35 to 140 µm, about 35 to 130 µm, about 35 to 120 µm, about 45 to 180 µm, about 45 to 160 µm, about 45 to 155 µm, about 45 to 140 µm, about 45 to 130 µm or more, about 45 to 120 µm, about 60 to 180 µm, about 60 to 160 µm, about 60 to 155 µm, about 60 to 140 µm, about 60 to 130 µm, about 60 to 120 µm, about 80 to 180 µm, about 80 to 160 µm, about 80 to 155 µm, about 80 to 140 µm, about 80 to 130 µm or about 80 to 120 µm.

The adhesive film 1 for metal terminal can be suitably applied to an exterior material for an all-solid-state battery, and the thickness of the laminate forming the exterior material for the all-solid-state battery is not particularly limited, and is preferably about 10,000 µm or less, about 8,000 µm or less, or about 5,000 µm or less from the viewpoint of cost reduction, improvement of the energy density and the like, and preferably about 100 µm or more, about 150 µm or more, or about 200 µm or more from the viewpoint of maintaining the function of the exterior material 3 for an all-solid-state battery of protecting a battery element. The thickness of the laminate is preferably, in the range of, for example, about 100 to 10,000 µm, about 100 to 8,000 µm, about 100 to 5,000 µm, about 150 to 10,000 µm, about 150 to 8,000 µm, about 150 to 5,000 µm, about 200 to 10,000 µm, about 200 to 8,000 µm, or about 200 to 5,000 µm, and particularly preferably about 100 to 500 µm.

### (Base material layer 31)

In the exterior material 3 for electrical storage devices, the base material layer 31 is a layer that functions as a base material of the exterior material for electrical storage devices, and forms the outermost layer side of the exterior material for electrical storage devices.

The material that forms the base material layer 31 is not particularly limited as long as it has an insulation quality. Examples of the material that forms the base material layer 31 include polyester, polyamide, epoxy, acrylic, fluororesins, polyurethane, silicone resins, phenol, polyetherimide, polyimide and mixtures and copolymers thereof. Polyester such as polyethylene terephthalate or polybutylene terephthalate has the advantage that it is excellent in electrolytic solution resistance, so that whitening etc. due to deposition of an electrolytic solution is hard to occur, and thus the polyester is suitably used as a material for formation of the base material layer 31. In addition, a polyamide film is excellent in stretchability, can prevent occurrence of whitening due to resin breakage in the base material layer 31 during molding, and is thus suitably used as a material for formation of the base material layer 31.

The base material layer 31 may be formed of a uniaxially or biaxially stretched resin film, or may be formed of an unstretched resin film. Among them, a uniaxially or biaxially stretched resin film, particularly a biaxially stretched resin film has improved heat resistance through orientation and crystallization, and is therefore suitably used as the base material layer 31.

Among them, nylons and polyesters are preferable and biaxially stretched nylons and biaxially stretched polyesters are more preferable as resin films for formation of the base material layer 31. Since the all-solid-state battery has tolerance to a temperature of 150°C or higher, sealing is often performed at a high temperature of 200°C or higher, and biaxially stretched polyester is most suitable.

The base material layer 31 can also be laminated with a resin film which is made of a different material for improving pinhole resistance, and insulation quality as a packaging of an electrical storage device. Specific examples include a multilayer structure in which a polyester film and a nylon film are laminated, and a multilayer structure in which a biaxially stretched polyester and a biaxially stretched nylon are laminated. When the base material layer 31 is made to have a multilayer structure, the resin films may be bonded with the use of an adhesive, or may be directly laminated without the use of an adhesive. Examples of the method for bonding the resin films without the use of an adhesive include methods in which the resin films are bonded in a heat-melted state, such as a co-extrusion method, a sand lamination method and a thermal lamination method. For sealing at a high temperature, it is desirable that at least the outermost layer be a biaxially stretched polyester.

In addition, the friction of the base material layer 31 may be reduced for improving moldability. When the friction of the base material layer 31 is reduced, the friction coefficient of the surface thereof is not particularly limited, and it is, for example, 1.0 or less. Examples of the method for reducing the friction of the base material layer 31 include matting treatment, formation of a thin film layer of a slipping agent, and a combination thereof.

The thickness of the base material layer 31 is, for example, about 10 to 50 µm, preferably about 15 to 30 µm.

### (Adhesive agent layer 32)

In the exterior material 3 for electrical storage devices, the adhesive agent layer 32 is a layer disposed on the base material layer 31 if necessary for imparting adhesion to the base material layer 31. That is, the adhesive agent layer 32 is provided between the base material layer 31 and the barrier layer 33.

The adhesive agent layer 32 is formed from an adhesive capable of bonding the base material layer 31 and the barrier layer 33. The adhesive used for forming the adhesive agent layer 32 may be a two-liquid curable adhesive, or may be a one-liquid curable adhesive. In addition, the adhesion mechanism of the adhesive used for forming the adhesive agent layer 32 is not particularly limited, and may be any one of a chemical reaction type, a solvent volatilization type, a heat melting type, a heat pressing type and so on.

As resin components of adhesives that can be used for formation of the adhesive agent layer 32, polyurethane-based two-liquid curable adhesive agents; and polyamides, polyesters or blend resins of these resins and modified polyolefins are preferable because they are excellent in spreadability, durability and a yellowing inhibition action under high-humidity conditions, a thermal degradation inhibition action during heat-sealing, and so on, and effectively suppress occurrence of delamination by inhibiting a reduction in lamination strength between the base material layer 31 and the barrier layer 33.

The adhesive agent layer 32 may be made multilayered with different adhesive components. When the adhesive agent layer 32 is made multilayered with different components, it is preferable that a resin excellent in bondability to the base material layer 31 is selected as an adhesive component to be disposed on the base material layer 31 side, and an adhesive component excellent in bondability to the barrier layer 33 is selected as an adhesive component to be disposed on the barrier layer 33 side, from the viewpoint of improving lamination strength between the base material layer 31 and the barrier layer 33. When the adhesive agent layer 32 is made multilayered with different adhesive components, specific examples of the preferred adhesive component to be disposed on the barrier layer 33 side include acid-modified polyolefins, metal-modified polyolefins, mixed resins of polyesters and acid-modified polyolefins, and resins containing a copolymerization polyester.

The thickness of the adhesive agent layer 32 is, for example, about 2 to 50 µm, preferably about 3 to 25 µm.

### (Barrier layer 33)

In the exterior material for electrical storage devices, the barrier layer 33 is a layer which is intended to improve the strength of the exterior material for electrical storage devices and which has a function of preventing ingress of water vapor, oxygen, light and the like into the electrical storage device. The barrier layer 33 is preferably a metal layer, i.e. a layer formed of a metal. Specific examples of the metal forming the barrier layer 33 include aluminum, stainless and titanium, with aluminum being preferred. The barrier layer 33 can be formed from, for example, a metal foil, a metal vapor-deposited film, an inorganic oxide vapor-deposited film, a carbon-containing inorganic oxide vapor-deposited film, a film provided with any of these vapor-deposited films, or the like, and is formed preferably from a metal foil, more preferably from an aluminum foil. From the viewpoint of preventing generation of wrinkles and pinholes in the barrier layer 33 during manufacturing of the exterior material for electrical storage devices, it is more preferable to form the barrier layer from a soft aluminum foil such as annealed aluminum (JIS H4160: 1994 A8021H-O, JIS H4160: 1994 A8079H-O, JIS H4000:2014 A8021P-O, JIS H4000:2014 A8079P-O).

The thickness of the barrier layer 33 is preferably about 10 to 200 µm, more preferably about 20 to 100 µm, from the viewpoint of making pinholes less likely to be generated by molding while thinning the exterior material for electrical storage devices.

In addition, at least one surface, preferably both surfaces, of the barrier layer 33 are subjected to a chemical conversion treatment for stabilization of bonding, prevention of dissolution and corrosion, and so on. Here, the chemical conversion treatment is a treatment for forming a corrosion-resistant film on the surface of the barrier layer.

### (Adhesive layer 34)

In the exterior material 3 for electrical storage devices, the adhesive layer 34 is a layer provided between the barrier layer 33 and the heat-sealable resin layer 35 if necessary for firmly bonding the heat-sealable resin layer 35.

The adhesive layer 34 is formed from an adhesive capable of bonding the barrier layer 33 and the heat-sealable resin layer 35 to each other. The composition of the adhesive used for forming the adhesive layer is not particularly limited, and examples thereof include adhesives formed of a polyester polyol compound and an alicyclic isocyanate compound.

The thickness of the adhesive layer 34 is, for example, about 1 to 40 µm, preferably about 2 to 30 µm.

### (Heat-sealable resin layer 35)

In the exterior material 3 for electrical storage devices, the heat-sealable resin layer 35 is a layer which corresponds to an innermost layer and performs a function of hermetically sealing the electrical storage device element by heat-welding the heat-sealable resin layers to each other during construction of the electrical storage device.

The resin component to be used in the heat-sealable resin layer 35 is not particularly limited as long as it can be heat-welded, and for the exterior material for electrical storage devices, examples thereof generally include polyolefins and cyclic polyolefins.

Specific examples of the polyolefin include polyethylene such as low-density polyethylene, medium-density polyethylene, high-density polyethylene and linear low-density polyethylene; crystalline or noncrystalline polypropylene such as homopolypropylene, block copolymers of polypropylene (e.g. block copolymers of propylene and ethylene) and random copolymers of polypropylene (e.g. random copolymers of propylene and ethylene); terpolymers of ethylene-butene-propylene; and the like. Among these polyolefins, polyethylene and polypropylene are preferred.

The cyclic polyolefin is a copolymer of an olefin and a cyclic monomer, and examples of the olefin as a constituent monomer of the cyclic polyolefin include ethylene, propylene, 4-methyl-1-pentene, butadiene and isoprene. Examples of the cyclic monomer as a constituent monomer of the cyclic polyolefin include cyclic alkenes such as norbornene, specifically cyclic dienes such as cyclopentadiene, dicyclopentadiene, cyclohexadiene and norbornadiene. Among these polyolefins, cyclic alkenes are preferable, and norbornene is further preferable. Examples of the constituent monomer include styrene.

Among these resin components, crystalline or noncrystalline polyolefins, cyclic polyolefins and blend polymers thereof are preferable, and polyethylene, polypropylene, copolymers of ethylene and norbornene, and blend polymers of two or more thereof are more preferable.

The heat-sealable resin layer 35 may be formed from one resin component alone, or may be formed from a blend polymer obtained by combining two or more resin components. Further, the heat-sealable resin layer 35 may be formed of only one layer, but may be formed of two or more layers with the same resin component or different resin components.

The thickness of the heat-sealable resin layer 35 is not particularly limited, and is, for example, about 2 to 2000 µm, preferably about 5 to 1000 µm, still more preferably about 10 to 500 µm.

The adhesive film 1 for metal terminal according to the present disclosure can be particularly suitably applied to an exterior material for an all-solid-state battery, and the melting point of the heat-sealable resin layer 35 of the exterior material for an all-solid-state battery is preferably 150 to 250°C, more preferably 180 to 270°C, still more preferably 200 to 270°C, still more preferably 200 to 250°C.

Examples of the resin contained in the heat-sealable resin layer 35 of the exterior material for an all-solid-state battery include polyolefins such as polypropylene and polyethylene, acid-modified polyolefins such as acid-modified polypropylene and acid-modified polyethylene, and polybutylene terephthalate. Among them, polybutylene terephthalate is excellent in heat resistance, and therefore it is preferable that in the exterior material for an all-solid-state battery, the heat-sealable resin layer 35 is formed of a polybutylene terephthalate film. The heat-sealable resin layer 35 is formed of a polybutylene terephthalate film, and therefore is also excellent in adhesion to the resin layer A of the adhesive film for metal terminal according to the present disclosure. The polybutylene terephthalate film that forms the heat-sealable resin layer 35 may be formed into the heat-sealable resin layer 35 by laminating a polybutylene terephthalate film prepared in advance with the adhesive layer 34, or may be formed into a film by melt-extruding a resin for forming the polybutylene terephthalate film and laminated with the adhesive layer 34.

The polybutylene terephthalate film may be a stretched polybutylene terephthalate film or an unstretched polybutylene terephthalate film, and is preferably an unstretched polybutylene terephthalate film.

It is preferable that the polybutylene terephthalate film contains an elastomer in addition to polybutylene terephthalate. The elastomer is one that serves to enhance the flexibility of the polybutylene terephthalate film while securing the durability of the polybutylene terephthalate film in a high-temperature environment. The elastomer is preferably at least one thermoplastic elastomer selected from polyester-based elastomers, polyamide-based elastomers, polyurethane-based elastomers, polyolefin-based elastomers, polystyrene-based elastomers, and polyether-based elastomers, or a thermoplastic elastomer which is a copolymer of any of the foregoing elastomers. In the polybutylene terephthalate film, the content of the elastomer is not particularly limited as long as the flexibility of the polybutylene terephthalate film can be enhanced while the durability of the polybutylene terephthalate film in a high-temperature environment is secured, and the content of the elastomer is, for example, about 0.1 mass% or more, preferably about 0.5 mass% or more, more preferably about 1.0 mass% or more, still more preferably about 3.0 mass% or more. The content is, for example, about 10.0 mass% or less, about 8.0 mass% or less, or about 5.0 mass% or less. The content is preferably in the range of about 0.1 to 10.0 mass%, about 0.1 to 8.0 mass%, about 0.1 to 5.0 mass%, about 0.5 to 10.0 mass%, about 0.5 to 8.0 mass%, about 0.5 to 5.0 mass%, about 1.0 to 10.0 mass%, about 1.0 to 8.0 mass%, about 1.0 to 5.0 mass%, about 3.0 to 10.0 mass%, about 3.0 to 8.0 mass%, or about 3.0 to 5.0 mass%.

The heat-sealable resin layer 35 may be composed of only one layer, or may be composed of two or more layers with the same resin component or different resin components. When the heat-sealable resin layer 35 is composed of two or more layers, at least one layer is preferably formed from a polybutylene terephthalate film, and the polybutylene terephthalate film is preferably an innermost layer of the exterior material for an all-solid-state battery. The layer bonded to the adhesive layer 34 is preferably a polybutylene terephthalate film. When the heat-sealable resin layer 35 is formed from two or more layers, the layer which is not formed from a polybutylene terephthalate film may be, for example, a layer formed from a polyolefin such as polypropylene or polyethylene, an acid-modified polyolefin such as acid-modified polypropylene or acid-modified polyethylene, or the like. However, since polyolefins and acid-modified polyolefins have lower durability in a high-temperature environment as compared to polybutylene terephthalate, it is preferable that the heat-sealable resin layer 35 includes only a polybutylene terephthalate film.

### 2. Electrical storage device

The electrical storage device 10 of the present disclosure includes the electrical storage device element 4 including at least a positive electrode, a negative electrode and an electrolyte; the exterior material 3 for electrical storage devices that seals the electrical storage device element 4; and the metal terminal 2 electrically connected to each of the positive electrode and the negative electrode and protruding to the outside of the exterior material 3 for electrical storage devices. In the electrical storage device 10 of the present disclosure, the adhesive film 1 for metal terminal according to the present disclosure is interposed between the metal terminal 2 and the exterior material 3 for electrical storage devices. That is, the electrical storage device 10 of the present disclosure can be manufactured by a method including the step of interposing the adhesive film 1 for metal terminal according to the present disclosure between the metal terminal 2 and the exterior material 3 for electrical storage devices.

Specifically, the electrical storage device element 4 including at least a positive electrode, a negative electrode and an electrolyte is covered with the exterior material 3 for electrical storage devices such that a flange portion (a region where the heat-sealable resin layers 35 contact each other, the region being a peripheral edge portion 3a of the exterior material for electrical storage devices) of the exterior material for electrical storage devices can be formed on the peripheral edge of the electrical storage device element 4, where the adhesive film 1 for metal terminal according to the present disclosure is interposed between the metal terminal 2 and the heat-sealable resin layer 35 while the metal terminal 2 connected to each of the positive electrode and the negative electrode protrudes to the outside, and the heat-sealable resin layers 35 at the flange portion are heat-sealed to each other, thereby providing the electrical storage device 10 using the exterior material 3 for electrical storage devices. When the electrical storage device element 4 is stored using the exterior material 3 for electrical storage devices, the heat-sealable resin layer 35 of the exterior material 3 for electrical storage devices is on the inner side (a surface contacting the electrical storage device element 4).

The exterior material for electrical storage devices according to the present disclosure can be suitably used for electrical storage devices such as batteries (including condensers, capacitors and the like.). The exterior material for electrical storage devices according to the present disclosure may be used for either primary batteries or secondary batteries, and is preferably used for secondary batteries. The type of a secondary battery to which the exterior material for electrical storage devices according to the present disclosure is applied is not particularly limited, and examples thereof include lithium ion batteries, lithium ion polymer batteries, all-solid-state batteries, lead storage batteries, nickel-hydrogen storage batteries, nickel-cadmium storage batteries, nickel-iron storage batteries, nickel-zinc storage batteries, silver oxide-zinc storage batteries, metal-air batteries, polyvalent cation batteries, condensers and capacitors. Of these secondary batteries, preferred subjects to which the exterior material for electrical storage devices according to the present disclosure is applied include lithium ion batteries and lithium ion polymer batteries.

Among these, adhesive film 1 for metal terminal according to the present disclosure can be suitably applied to an all-solid-state battery.

### EXAMPLES

Hereinafter, the present disclosure will be described in detail by way of examples and comparative examples. However, the present disclosure is not limited to examples.

### <Preparation of adhesive film for metal terminal>

### Example 1

A polybutylene terephthalate film (melting point: 215°C and thickness: 100 µm) containing an elastomer (block copolymer of polybutylene terephthalate and polyether) at 7.0 mass% was provided, and a single layer of the polybutylene terephthalate film was used as an adhesive film for metal terminal.

### Example 2

A polybutylene terephthalate film (melting point: 215°C and thickness: 100 µm) containing an elastomer (α-olefin copolymer of polymethylpentene) at 2.0 mass% was provided, and a single layer of the polybutylene terephthalate film was used as an adhesive film for metal terminal.

### Example 3

By extrusion molding, a laminate was manufactured in which polybutylene terephthalate (melting point: 215°C and thickness: 30 µm) containing an elastomer (block copolymer of polybutylene terephthalate and polyether) at 7 mass%, polyethylene terephthalate (melting point: 258°C and thickness: 40 µm), and polybutylene terephthalate (melting point: 215°C and thickness: 30 µm) containing an elastomer (block copolymer of polybutylene terephthalate and polyether) at 7 mass% were laminated in this order. The obtained laminate was used as an adhesive film for metal terminal.

### Example 4

A laminate of polybutylene terephthalate (melting point: 215°C and thickness: 50 µm) containing an elastomer (block copolymer of polybutylene terephthalate and polyether) at 7 mass% and maleic anhydride-modified block polyprolene (melting point: 157°C and thickness: 50 µm) was manufactured by coextrusion molding, and the obtained laminate was used as an adhesive film for metal terminal.

### Example 5

A laminate of polybutylene terephthalate (melting point: 215°C and thickness: 50 µm) containing an elastomer (block copolymer of polybutylene terephthalate and polyether) at 7 mass%, imine-modified random polypropylene (melting point: 141°C and thickness: 20 µm) and maleic anhydride-modified block polyprolene (melting point: 157°C and thickness: 30 µm) was manufactured by coextrusion molding, and the obtained laminate was used as an adhesive film for metal terminal.

### Example 6

A laminate of polybutylene terephthalate (melting point: 215°C and thickness: 50 µm) containing an elastomer (block copolymer of polybutylene terephthalate and polyether) at 7 mass%, imine-modified random polypropylene (melting point: 141°C and thickness: 20 µm) and maleic anhydride-modified homopolyprolene (melting point: 165°C and thickness: 30 µm) was manufactured by coextrusion molding, and the obtained laminate was used as an adhesive film for metal terminal.

### Example 7

A laminate of polybutylene terephthalate (melting point: 215°C and thickness: 50 µm) containing an elastomer (block copolymer of polybutylene terephthalate and polyether) at 7 mass%, imine-modified homopolypropylene (melting point: 160°C and thickness: 20 µm) and maleic anhydride-modified block polyprolene (melting point: 157°C and thickness: 30 µm) was manufactured by coextrusion molding, and the obtained laminate was used as an adhesive film for metal terminal.

### Example 8

A laminate of polybutylene terephthalate (melting point: 215°C and thickness: 50 µm) containing an elastomer (block copolymer of polybutylene terephthalate and polyether) at 7 mass%, imine-modified homopolypropylene (melting point: 160°C and thickness: 20 µm) and maleic anhydride-modified homopolyprolene (melting point: 165°C and thickness: 30 µm) was manufactured by coextrusion molding, and the obtained laminate was used as an adhesive film for metal terminal.

### Comparative Example 1

A polybutylene terephthalate film (melting point: 225°C and thickness: 100 µm) was provided, and a single layer of the polybutylene terephthalate film was used as an adhesive film for metal terminal.

### Comparative Example 2

A polyethylene terephthalate film (melting point: 258°C and thickness: 100 µm) was provided, and a single layer of the polyethylene terephthalate film was used as an adhesive film for metal terminal.

### Comparative Example 3

A maleic anhydride-modified block polypropylene film (melting point: 157°C and thickness: 100 µm) was prepared, and a single layer of the film was used as an adhesive film for metal terminal.

### (Preparation of exterior material for all-solid-state battery)

First, an exterior material for an all-solid-state battery was provided. As a base material layer, a polyethylene terephthalate film (25 µm) was provided in which a surface to be bonded had been corona-treated. In addition, an aluminum alloy foil (JIS H4160: 1994 A8021 H-O (thickness: 40 µm)) was provided as a barrier layer. As a heat-sealable resin layer, an unstretched polybutylene terephthalate film (thickness: 50 µm) was provided which contained an elastomer (block copolymer of polybutylene terephthalate and polyether) at 7 mass% and in which a surface to be bonded had been corona-treated. Using a two-liquid curable urethane adhesive (polyol compound and aromatic isocyanate compound), the base material layer and the barrier layer were bonded to each other by a dry lamination method to produce a laminate of a base material layer (25 µm), an adhesive agent layer (3 µm) and a barrier layer (40 µm). Next, using a resin composition containing a polyester polyol compound (containing a hydrolysis suppressing agent) and an alicyclic isocyanate compound (containing isophorone diisocyanate), the obtained laminate on the barrier layer side and the heat-sealable resin layer were bonded to each other by a dry lamination method to laminate an adhesive layer (3 µm) and a heat-sealable resin layer (50 µm) on the barrier layer. Next, the obtained laminate was aged at 80°C for 72 hours and heated to obtain an exterior material including a laminate in which a base material layer (polyethylene terephthalate film (25 µm)), an adhesive agent layer (cured product of two-liquid curable urethane adhesive (3 µm)), a barrier layer (aluminum alloy foil (40 µm)), an adhesive layer (cured product of a resin composition containing a polyester polyol compound and an alicyclic isocyanate compound (3µm)) and a heat-sealable resin layer (polybutylene terephthalate film containing elastomer (50 µm)) were laminated in this order.

### (Preparation of adhesive film for metal terminal)

For each of the adhesive films for metal terminal which were obtained in examples and comparative examples, a surface of a layer containing polybutylene terephthalate was subjected to corona discharge treatment and used as a surface to be sealed to the metal terminal in the cased of an asymmetric layer configuration. In the case of a single layer or symmetrical layer configuration, an arbitrary surface was subjected to corona discharge treatment and taken as a surface to be sealed to the metal terminal. It is to be noted that for Example 4 and Comparative Example 3 in which maleic anhydride-modified block polypropylene was contained, corona discharge treatment was not performed, the maleic anhydride-modified polypropylene-side surface was taken as a surface to be sealed to the metal terminal, and such films were provided for the evaluation described later.

### (Preparation of metal terminal with adhesive film for metal terminal)

An aluminum alloy foil having a thickness of 400 µm, a width of 45 mm and a length of 60 mm was provided as a metal terminal, and plated with a treatment agent including three components: a phenol resin, a chromium (III) fluoride compound and phosphoric acid in such a manner that the treatment layer had a thickness of about 100 nm, thereby producing a surface-treated metal terminal. Next, two adhesive films for metal terminal which had been cut to a size of 10 × 55 mm were provided, and disposed on both surfaces of the surface-treated metal terminal at a position of 10 mm from the end of the metal terminal, with the corona-treated surface on the metal terminal side, and heat-sealing was performed under the condition of 240°C × 0.25 MPa (surface pressure applied to silicon rubber) × 16 seconds using a flat plate press machine with upper and lower metal heads each provided with silicon rubber having a thickness of 3.0 mm and a hardness of 40, thereby producing a metal terminal with an adhesive film for metal terminal. It is to be noted that for Example 4 and Comparative Example 3 in which a block-type maleic anhydride-modified polypropylene film was used as a resin on the metal terminal side, a metal terminal with an adhesive film for metal terminal was prepared under the condition of 190°C × 0.25 MPa (surface pressure applied to silicone rubber) × 16 seconds.

### <Measurement of residual ratio of thickness of adhesive film for metal terminal after sealing (evaluation of insulation quality>

The adhesive film for metal terminal in the metal terminal with the adhesive film for metal terminal was cut at a central portion thereof, and the thickness of the adhesive film for metal terminal was measured by cross-sectional observation with an optical microscope, and taken as a thickness before sealing. Next, the exterior material was cut to a size of 60 × 150 mm, and then folded in half with the heat-sealable resin layer on the inner side, a separately provided metal terminal with an adhesive film for metal terminal was sandwiched therebetween in such a manner that a side close to the adhesive film for metal terminal was brought into contact with the fold, and heat-sealing was performed under the condition of 240°C × 1.0 MPa × 5 seconds using a sealing machine with upper and lower metal heads having a width of 7 mm. The seal portion was cut at a central portion thereof, and the thickness of the adhesive film for metal terminal was measured in the same manner as in the case of the thickness before sealing, and taken as a thickness after sealing. The residual ratio (%) of the adhesive film for metal terminal was calculated from the thickness after sealing/the thickness before sealing (excluding the thickness of the metal terminal), and used for evaluation of insulation quality.

### <Measurement of sealing strength at 150°C (evaluation of heat resistance)>

An exterior material for an all-solid-state battery was provided, and cut to a size of 30 mm in TD and 150 mm in MD. As a metal terminal with an adhesive film for metal terminal, an aluminum foil (JIS H 4160: 1994 A 8079 H-O) (22.5 mm in TD, 180 mm in MD and 400 µm in thickness) was provided. An adhesive film for metal terminal (20 mm in width (TD) and 165 mm in length (MD)) was disposed on each of both surfaces of the metal terminal. Here, the lamination was performed in such a manner that MD and TD of the metal terminal coincided with the length direction (MD) and the width direction (TD) of the adhesive film, respectively, and the centers of the metal terminal and the adhesive film coincided with each other. Next, heat-welding was performed under the conditions of a temperature of 200°C, a surface pressure of about 0.25 MPa and 16 seconds to produce a laminate in which an adhesive film for metal terminal, a metal terminal and an adhesive film for metal terminal were laminated in this order. Further, the metal terminal with an adhesive film for metal terminal was divided into six equal parts in the length direction (MD), with each part having a width of 25 mm. Next, the exterior material for an all-solid-state battery (exterior material) was folded in half in the length direction (MD) (30 mm in TD and 75 mm in MD) with the heat-sealable resin layers thereof on the inner side, and the metal terminal with an adhesive film for metal terminal (25 mm in width and 20 mm in length) was sandwiched therebetween. Here, the metal terminal with an adhesive film for metal terminal was sandwiched in such a manner that MD of the adhesive film for metal terminal and MD of the exterior material crossed orthogonal to each other and the metal terminal with an adhesive film for metal terminal was abutted against the inner portion of the fold of the exterior material. In this state, heat sealing was performed under the condition of 240°C × 1.0 MPa × 12 seconds using a sealing machine with upper and lower metal heads having a width of 7 mm. The heat-sealed portion of the obtained laminate has a configuration in which an exterior material, an adhesive film for metal terminal, a metal terminal, an adhesive film for metal terminal and an exterior material are laminated in this order. Next, the laminate was cut in a direction perpendicular to a seal with a width of 7 mm to obtain a sample having a width of 15 mm. Here, the sample was obtained from the central portion of the laminate. Next, the exterior material on one side of the sample and the metal terminal were chucked, and the exterior material and the metal terminal were pulled in a direction of 180°C at a speed of 300 mm/min in an environment at 150°C with a tensile tester with a thermostatic bath to measure the sealing strength at 150°C.

**[Table 1]**

| | Laminated structure of adhesive film for metal terminal | Elastomer | Sealing strength at 150°C (N/15 mm) | Insulation quality (residual ratio of thickness %) |
|---|---|---|---|---|
| Example 1 | Elastomer-containing PBT (melting point 215°C, 100 µm) | Block copolymer of polybutylene terephthalate and polyether | 56 | 78 |
| Example 2 | Elastomer-containing PBT (melting point 215°C, 100 µm) | α-olefin copolymer of polymethyl pentene | 52 | 79 |
| Example 3 | Elastomer-containing PBT (melting point 215°C, 30 µm)/PET (melting point 258°C, 40 µm)/ elastomer-containing PBT (melting point 215°C, (30 µm) | Block copolymer of polybutylene terephthalate and polyether | 46 | 86 |
| Example 4 | Elastomer-containing PBT (melting point 215°C, 50 µm)/acid-modified block polypropylene (melting point 157°C, 50 µm) | Block copolymer of polybutylene terephthalate and polyether | 43 | 72 |
| Example 5 | Elastomer-containing PBT (melting point 215°C, 50 µm)/imine-modified random polypropylene (melting point 141°C, 20 µm)/acid-modified block polypropylene (melting point 157°C, 30 µm) | Block copolymer of polybutylene terephthalate and polyether | 48 | 71 |
| Example 6 | Elastomer-containing PBT (melting point 215°C, 50 µm)/imine-modified random polypropylene (melting point 141°C, 20 µm)/acid-modified homopolypropylene (melting point 165°C, 30 µm) | Block copolymer of polybutylene terephthalate and polyether | 52 | 74 |
| Example 7 | Elastomer-containing PBT (melting point 215°C, 50 µm)/imine-modified homopolypropylene (melting point 160°C, 20 µm)/acid-modified block polypropylene (melting point 157°C, 30 µm) | Block copolymer of polybutylene terephthalate and polyether | 51 | 74 |
| Example 8 | Elastomer-containing PBT (melting point 215°C, 50 µm)/imine-modified homopolypropylene (melting point 160°C, 20 µm)/acid-modified homopolypropylene (melting point 165°C, 30 µm) | Block copolymer of polybutylene terephthalate and polyether | 55 | 82 |
| Comparative Example 1 | PBT (melting point 225°C, 100 µm) | - | 36 | 79 |
| Comparative Example 2 | PBT (melting point 258°C, 100 µm) | - | 8 | 93 |
| Comparative Example 3 | Maleic anhydride-modified block polypropylene (melting point 157°C, 100 µm) | - | 9 | 41 |

The adhesive film for metal terminal in each of Examples 1 to 8 contains PBT having a melting point of 215°C, and the PBT contains an elastomer. The adhesive film for metal terminal in Examples 1 to 8 was superior in heat-resistant sealing strength to Comparative Example 1 in which PBT does not contain an elastomer. In Example 3, the adhesive film for metal terminal has a multilayer configuration with PET, and has a larger thickness residual ratio after sealing as compared to Comparative Example 1 and Examples 1 and 2, and there can be little risk of electrical short-circuit between the metal terminal and the barrier layer of the exterior material. In Example 4 to 8, practical heat resistance at 150°C was obtained while it was possible to perform sealing at a temperature about 50°C lower than that in Example 1 to 3 during production of the metal terminal with an adhesive film for metal terminal. In Example 5 to 8, the use of imine-modified polypropylene for the intermediate layer adhesion enhanced adhesion between the layers, so that the heat-resistant sealing strength was improved as compared to Example 4. In Comparative Example 2, the thickness residual ratio after sealing was large, but the value of sealing strength at 150°C was low because the adhesive film for metal terminal had a PET single layer. In Comparative Example 3, the adhesive film for metal terminal had a maleic anhydride-modified block polypropylene film single layer, and both the sealing strength at 150°C and the thickness residual ratio were low.

As described above, the present disclosure provides inventions of aspects as described below.
Item 1. An adhesive film for metal terminal which is interposed between a metal terminal electrically connected to an electrode of an electrical storage device element and an exterior material for electrical storage devices which seals the electrical storage device element, the adhesive film for metal terminal including at least one resin layer, in which the resin layer has a melting point of 150°C or higher and 270°C or lower, and the resin layer contains an elastomer.
Item 2. The adhesive film for metal terminal according to item 1, in which the resin layer contains polybutylene terephthalate.
Item 3. The adhesive film for metal terminal according to item 1 or 2, in which the elastomer includes at least one thermoplastic elastomer selected from polyester-based elastomers, polyamide-based elastomers, polyurethane-based elastomers, polyolefin-based elastomers, polystyrene-based elastomers, and polyether-based elastomers, or a thermoplastic elastomer which is a copolymer of any of the foregoing elastomers.
Item 4. The adhesive film for metal terminal according to any one of items 1 to 3, in which the elastomer is a thermoplastic elastomer including a block copolymer of polybutylene terephthalate and polyether.
Item 5. The adhesive film for metal terminal according to item 4, in which the polyether component is a copolymer of terephthalic acid and polytetramethylene ether glycol. Item 6. The adhesive film for metal terminal according to any one of items 1 to 5, in which the elastomer is a thermoplastic elastomer including an α-olefin copolymer of polymethylpentene.
Item 7. The adhesive film for metal terminal according to any one of items 1 to 6, in which a surface on a side of the exterior material for electrical storage devices includes the resin layer.
Item 8. The adhesive film for metal terminal according to any one of items 1 to 7, in which a resin forming the surface on the side of the exterior material for electrical storage devices and a resin forming a surface on a side of the metal terminal are the same resin.
Item 9. The adhesive film for metal terminal according to item 1, further including an acid-modified homopolypropylene layer or an acid-modified block polypropylene layer. Item 10. The adhesive film for metal terminal according to any one of items 1 to 9, including a laminate including at least a first resin layer, an intermediate layer and a second resin layer in this order, in which at least one of the first resin layer, the intermediate layer and the second resin layer includes the resin layer, and a melting point of the intermediate layer is 250°C or higher.
Item 11. The adhesive film for metal terminal according to any one of items 1 to 9, including a laminate including at least a first resin layer, an intermediate layer and a second resin layer in this order, in which at least one of the first resin layer, the intermediate layer and the second resin layer includes the resin layer, and the intermediate layer is formed of an imine-modified polyolefin-based resin.
Item 12. The adhesive film for metal terminal according to any one of items 1 to 9, including a laminate including at least a first resin layer and a second resin layer in this order, in which at least one of the first resin layer and the second resin layer includes the resin layer.
Item 13. The adhesive film for metal terminal according to any one of items 1 to 12, in which a total thickness of the adhesive film for metal terminal is 50 µm or more and 500 µm or less.
Item 14. The adhesive film for metal terminal according to any one of items 1 to 13, in which the exterior material for electrical storage devices includes a laminate including at least a base material layer, a barrier layer and a heat-sealable resin layer in this order from an outside, and a melting point of the heat-sealable resin layer is 150°C or higher and 250°C or lower.
Item 15. The adhesive film for metal terminal according to any one of items 1 to 14, in which the exterior material for electrical storage devices includes a laminate including at least a base material layer, a barrier layer and a heat-sealable resin layer in this order from the outside, and the heat-sealable resin layer contains polybutylene terephthalate. Item 16. The adhesive film for metal terminal according to any one of items 1 to 15, in which the exterior material for electrical storage devices is an exterior material for an all-solid-state battery.
Item 17. A metal terminal with an adhesive film for metal terminal in which the adhesive film for metal terminal according to any one of items 1 to 16 is attached to a metal terminal.
Item 18. An electrical storage device including: the electrical storage device element including at least a positive electrode, a negative electrode and an electrolyte; the exterior material for electrical storage devices that seals the electrical storage device element; and the metal terminal electrically connected to each of the positive electrode and the negative electrode and protruding to outside of the exterior material for electrical storage devices, in which the adhesive film for metal terminal according to any one of items 1 to 16 is interposed between the metal terminal and the exterior material for electrical storage devices.
Item 19. A method for manufacturing an electrical storage device including the electrical storage device element including at least a positive electrode, a negative electrode and an electrolyte; the exterior material for electrical storage devices that seals the electrical storage device element; and the metal terminal electrically connected to each of the positive electrode and the negative electrode and protruding to outside of the exterior material for electrical storage devices, the method including a step of interposing the adhesive film for metal terminal according to any one of items 1 to 16 between the metal terminal and the exterior material for electrical storage devices, and sealing the electrical storage device element with the exterior material for electrical storage devices.

### DESCRIPTION OF REFERENCE SIGNS

1: Adhesive film for metal terminal
2: Metal terminal
3: Exterior material for electrical storage devices
3a: Peripheral edge portion of exterior material for electrical storage devices
4: Electrical storage device element
10: Electrical storage device
11: Intermediate layer
12a: First resin layer
12b: Second resin layer
13: Adhesion promoter layer
31: Base material layer
32: Adhesive agent layer
33: Barrier layer
34: Adhesive layer
35: Heat-sealable resin layer

## Claims

1. An adhesive film for metal terminal which is interposed between a metal terminal electrically connected to an electrode of an electrical storage device element and an exterior material for electrical storage devices which seals the electrical storage device element,
the adhesive film for metal terminal comprising at least one resin layer,
wherein
the resin layer has a melting point of 150°C or higher and 270°C or lower, and the resin layer contains an elastomer.

2. The adhesive film for metal terminal according to claim 1, wherein the resin layer contains polybutylene terephthalate.

3. The adhesive film for metal terminal according to claim 1 or 2, wherein the elastomer includes at least one thermoplastic elastomer selected from polyester-based elastomers, polyamide-based elastomers, polyurethane-based elastomers, polyolefin-based elastomers, polystyrene-based elastomers, and polyether-based elastomers, or a thermoplastic elastomer which is a copolymer of any of the foregoing elastomers.

4. The adhesive film for metal terminal according to any one of claims 1 to 3, wherein the elastomer is a thermoplastic elastomer including a block copolymer of polybutylene terephthalate and polyether.

5. The adhesive film for metal terminal according to claim 4, wherein the polyether component is a copolymer of terephthalic acid and polytetramethylene ether glycol.

6. The adhesive film for metal terminal according to any one of claims 1 to 5, wherein the elastomer is a thermoplastic elastomer including an α-olefin copolymer of polymethylpentene.

7. The adhesive film for metal terminal according to any one of claims 1 to 6, wherein a surface on a side of the exterior material for electrical storage devices includes the resin layer.

8. The adhesive film for metal terminal according to any one of claims 1 to 7, wherein a resin forming the surface on the side of the exterior material for electrical storage devices and a resin forming a surface on a side of the metal terminal are the same resin.

9. The adhesive film for metal terminal according to claim 1, further comprising an acid-modified homopolypropylene layer or an acid-modified block polypropylene layer.

10. The adhesive film for metal terminal according to any one of claims 1 to 9, comprising a laminate including at least a first resin layer, an intermediate layer and a second resin layer in this order,
wherein
at least one of the first resin layer, the intermediate layer and the second resin layer includes the resin layer, and
a melting point of the intermediate layer is 250°C or higher.

11. The adhesive film for metal terminal according to any one of claims 1 to 9, comprising a laminate including at least a first resin layer, an intermediate layer and a second resin layer in this order,
wherein
at least one of the first resin layer, the intermediate layer and the second resin layer includes the resin layer, and
the intermediate layer is formed of an imine-modified polyolefin-based resin.

12. The adhesive film for metal terminal according to any one of claims 1 to 9, comprising a laminate including at least a first resin layer and a second resin layer in this order,
wherein at least one of the first resin layer and the second resin layer includes the resin layer.

13. The adhesive film for metal terminal according to any one of claims 1 to 12, wherein a total thickness of the adhesive film for metal terminal is 50 µm or more and 500 µm or less.

14. The adhesive film for metal terminal according to any one of claims 1 to 13, wherein
the exterior material for electrical storage devices includes a laminate including at least a base material layer, a barrier layer and a heat-sealable resin layer in this order from an outside, and
a melting point of the heat-sealable resin layer is 150°C or higher and 250°C or lower.

15. The adhesive film for metal terminal according to any one of claims 1 to 14, wherein
the exterior material for electrical storage devices includes a laminate including at least a base material layer, a barrier layer and a heat-sealable resin layer in this order from the outside, and
the heat-sealable resin layer contains polybutylene terephthalate.

16. The adhesive film for metal terminal according to any one of claims 1 to 15, wherein the exterior material for electrical storage devices is an exterior material for an all-solid-state battery.

17. A metal terminal with an adhesive film for metal terminal, wherein the adhesive film for metal terminal according to any one of claims 1 to 16 is attached to a metal terminal.

18. An electrical storage device comprising:
the electrical storage device element including at least a positive electrode, a negative electrode and an electrolyte;
the exterior material for electrical storage devices that seals the electrical storage device element; and
the metal terminal electrically connected to each of the positive electrode and the negative electrode and protruding to outside of the exterior material for electrical storage devices,
wherein the adhesive film for metal terminal according to any one of claims 1 to 16 is interposed between the metal terminal and the exterior material for electrical storage devices.

19. A method for manufacturing an electrical storage device including the electrical storage device element including at least a positive electrode, a negative electrode and an electrolyte; the exterior material for electrical storage devices that seals the electrical storage device element; and the metal terminal electrically connected to each of the positive electrode and the negative electrode and protruding to outside of the exterior material for electrical storage devices,
the method comprising a step of interposing the adhesive film for metal terminal according to any one of claims 1 to 16 between the metal terminal and the exterior material for electrical storage devices, and sealing the electrical storage device element with the exterior material for electrical storage devices.
